**Europäisches Patentamt**

**European Patent Office**

**Office européen des brevets**

(19)

(11) Publication number: **0 302 569 B1**

# EUROPEAN PATENT SPECIFICATION

(12)

(45) Date of publication of patent specification :
**15.05.91 Bulletin 91/20**

(51) Int. Cl.⁵ : **B65G 63/00**

(21) Application number : **88201671.0**

(22) Date of filing : **02.08.88**

(54) **Storage and trans-shipment system for containers.**

(30) Priority : **03.08.87 NL 8701823**

(43) Date of publication of application :
**08.02.89 Bulletin 89/06**

(45) Publication of the grant of the patent :
**15.05.91 Bulletin 91/20**

(84) Designated Contracting States :
**BE DE ES FR GB GR IT NL SE**

(56) References cited :
**DE-A- 3 544 705**
**FR-A- 2 526 181**
**GB-A- 2 042 217**
**NL-A- 6 912 396**
**LE NOUVEL AUTOMATISME, vol. 28, no. 33, January/February 1983, pages 57-65; F. LEPAGE et al.: "Liaisons et protocoles d'information intra-entreprises"**

(73) Proprietor : **EUROPE CONTAINER TERMINUS B.V.**
**Seattleweg 7 P.O. Box 7400**
**NL-3000 HK Rotterdam (NL)**

(72) Inventor : **Nooijen, Franciscus Johannes Anthonius Maria**
**Franklin Rooseveltlaan 12**
**NL-4835 AB Breda (NL)**
Inventor : **Nagel, Anko Norman**
**Oordenweg 8**
**NL-3342 BX Hendrik-Ido-Ambacht (NL)**

(74) Representative : **Baarslag, Aldert D. et al**
**Nederlandsch Octrooibureau**
**Scheveningseweg 82 P.O. Box 29720**
**NL-2502 LS 's-Gravenhage (NL)**

## Description

The invention relates to a storage and trans-shipment system for containers, comprising a quay with quay cranes for loading and unloading container ships moored at said quay, a container storage depot that is provided with a set of gantry craneways placed next to each other, a number of cars not guided by rails for the transport of containers between the quay cranes and the gantry cranes, and means for automatic control of the cars.

A similar storage and trans-shipment system is known from laid-open Dutch Patent Application NL-A-6,912,396.

Flexibility of the process continues to be a prime requirement for trans-shipment of containers. In addition, labour constitutes an increasingly important factor in the total costs. For competitive reasons it is very important to improve the storage and trans-shipment of containers and to have this run more efficiently and cheaply by automation. The number of containers trans-shipped per employee over the quay of a container trans-shipment company will have to be greatly increased. In peak periods no or only very little additional personnel will have to be deployed. The storage and trans-shipment system will have to be embodied such that all sorts of automation and control processes are possible ; in addition, the containers will have to be able to be removed from the storage system in a completely random order or will have to be incorporated in that system.

The known system is aimed at completely automated storage and quay transport, guide cables connected to a control signal emitter being present under the surface of the transport lanes for the cars. Each car has signal detectors that are connected to a control device and allow the cars to follow a guide cable when moving. The number of possible routes that the cars should be able to choose in the case of an extensive storage and trans-shipment company (for example one with 8 quay cranes and 25 gantry cranes each with 4 set-down points) is very large. In fact the known system is unsuitable for such a large number of route choices for the cars. In addition, the known system is vulnerable because of possible breakage of the wires.

The object of the invention is to overcome these drawbacks and for this purpose the means for automatic control of each car comprise a freely programmable route selection system that is able to guide the car along pre-programmed positions in the quay area without guideways, each car being provided with navigation means to determine the path taken and to compare this with the path to be taken, a reference grid of transponders and/or induction wires and/or metal strips being placed in, on or underneath the metalling of the quay area, and each car being provided with one or more transmitter-receiver units which, by interaction with said reference grid, can determine the position of the car and transmit signals to the control means of the car for correction of the car's position.

Acceleration transducers, steering angle transducers, encoders, a radar sensor, a laser gyro, or combinations thereof can be considered for the navigation means. These means are known per se. Acceleration transducers are sensors that can register changes in speed. Encoders are pulse counters that can determine the number of revolutions of wheels. Radar sensors determine the speed of a vehicle by means of the Doppler effect. A laser gyro is a recorder for changes in angle. Essential to the idea of the invention is that the cars carry out an order using their own intelligence, the position of the cars being able to be controlled and corrected by means of the interaction between a reference grid in, on or underneath the metalling of the quay and transmitter-receiver units on the cars. In the paving of the travelling area of the cars there may be, for example, transponders placed in a grid pattern, each car being provided with a transmitter for microwaves as well as a receiver for microwaves with a coded signal that have been transmitted by one or more irradiated transponders. In addition, in the latter case, each car is provided with means for comparing the position that is determined by the coded signals received with the intended position.

Another possibility is that a grid of active inductive wires is placed in the paving and there are means present to modulate various frequencies in the wires such that the vehicle can detect its exact position at the junctions of the grid lines.

Finally, a grid of metal strips may be placed in, on or underneath the paving of the quay area, a metal detector placed on each car transmitting an electromagnetic field and the disturbance of this field being measured by the strips, such that this produces a measure for the position of the car with respect to the metal strip.

The cars carry out a particular order by using their own intelligence. With this the angle of the sets of wheels, the speed of the vehicle, the braking, the starting and stopping of the motor and such like are regulated. By means of a simple infrastructure in, on or underneath the paving and relatively complicated provisions on the cars a situation is achieved in which no or scarcely any limits to the number of route choices for the cars have to be set.

It is important that at least an end section of the gantry craneways extends into the quay area. The transport paths between the quay cranes and the gantry cranes are thus short and efficient working is possible.

In order to be able to avoid collisions with unforeseen obstacles, the cars may be provided with sensors for determining whether there is an obstacle within braking distance and means for bringing about an automatic stop in case an obstacle is detected.

It may be important that the cars and the gantry cranes can be controlled completely independently of each other. A prerequisite for this is that the gantry cranes do not play any part in the loading and unloading of the cars. For this purpose the cars may be provided with means for moving the carrying surface thereof up and down. For that matter cars with an immovable carrying surface are considerably cheaper and are therefore often preferable.

The complete chassis of the cars may, if so desired, be raised and lowered (for example with hydropneumatic springs), use being made of gantry-type skids (pallets) for transporting containers between the quay and the gantry cranes and the cars being able to drive into the portals of the skids and being able to lift these with a container standing on top.

If the cars have a separate lifting platform the containers can easily be taken from a car and temporarily stored in a buffer zone near the gantry cranes, supporting tables resting on one or more legs being placed in the transfer area for transfer of containers between the cars and the gantry cranes, and the smallest distance between said tables being smaller than the width of a container and the distance between the legs being sufficiently large to allow a car to pass through. A buffer area may also be created at the location of the quay cranes, supporting tables being hung on said quay cranes.

In order to make the supply and removal of containers on the land side easier, one or more land side cranes are placed on the side of the gantry cranes away from the quay, which land side cranes are able to travel along railways perpendicular to the gantry craneways, at least the railway of the land side cranes that is furthest away from the gantry cranes being raised. Because the railway is furthest away from the gantry craneways is raised, lorries can be driven to within the reach of the land side cranes. On the gantry crane side the land side cranes operate completely automatically whereas on the other side these land side cranes are manually operated. The land side cranes are preferably provided with a trolley with a turntable for turning a container through 90° or 180°.

The land side cranes may be omitted if the containers are transported from and to the gantry cranes with conventional means such as straddle carriers or fork lift trucks.

It is intended that the storage of containers and the transport on the quay be automated with the help of one single process control system. This process control system is linked to a container control system that is fed with data, from shipowners and agents, on the containers to be loaded and unloaded, data regarding the identification of the containers on the quay and during supply and distribution on land side, and data regarding the planned loading order of ships and such like. The process control system comprises, inter alia, the following sub-systems :

– a vehicle control system that determines the number of available vehicles and regulates the even deployment of vehicles,
– a traffic guidance system that receives periodical data regarding the position, speed and direction from the deployed vehicles and calculates the room to be occupied by each car in service and determines the priority with respect to other cars,
– an order-determining system that gives orders to cars, gantry cranes and land side cranes, and
– a route-determining system that determines the route for the cars,
– a communication system that controls the communication between the cars and the process control.

The gantry cranes work completely automatically, the occupation of the container storage depot by containers being planned as little as possible, in other words the placing of the containers is done as far as possible at random.

The gantry cranes may be provided with means whereby it is possible to work briefly at a considerably higher speed and peak situations can be better absorbed.

The invention will now be described further with the help of the figures.

Figure 1 shows a top view of a storage and transshipment company for containers according to the invention.

Figure 2 shows a part according to Figure 1 on a larger scale.

Figure 3 shows a part of Figure 2 with a few automatically controlled container transport cars on an even larger scale.

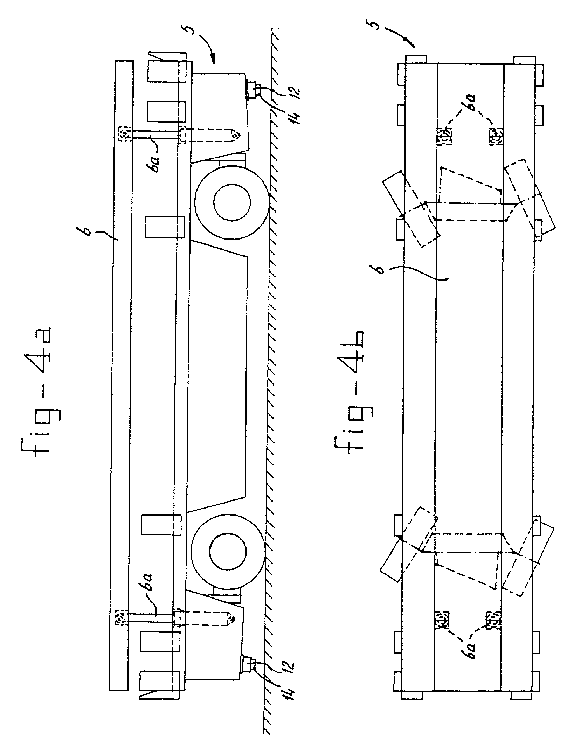

Figure 4a shows a side view of a car.

Figure 4b shows a top view of a car.

Figure 5 shows a view of the buffer area where the containers are transferred between the cars and the gantry cranes of the container storage depot.

Figure 6 shows a front view of a car with a gantry-type shaped set-down frame.

Figure 7 shows a view in perspective of the buffer area where containers are transferred between the gantry cranes of the container storage depot and the means of transport (lorries, trains and such like) for transportation to an external destination on the land side.

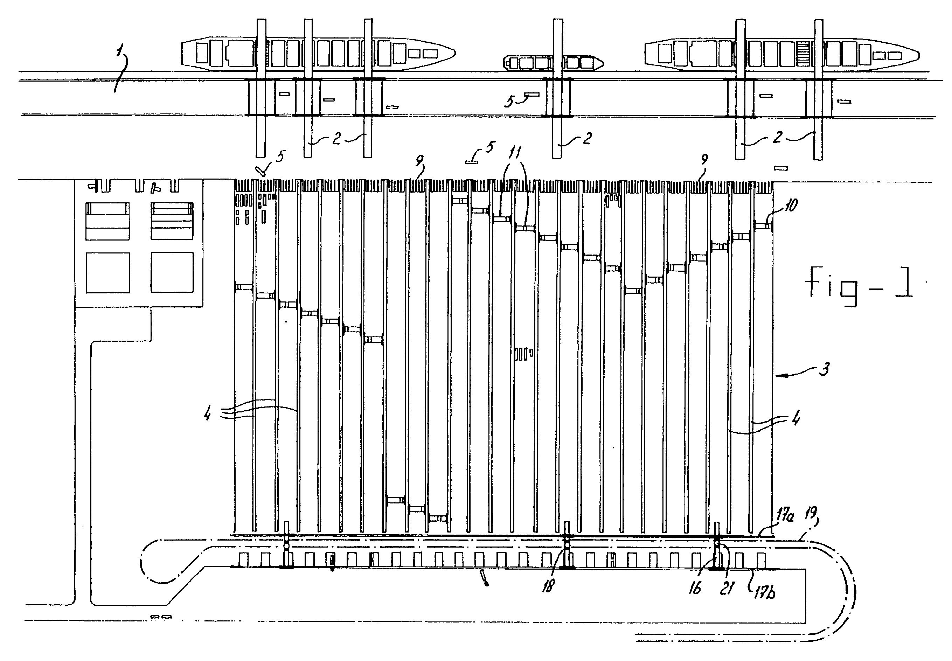

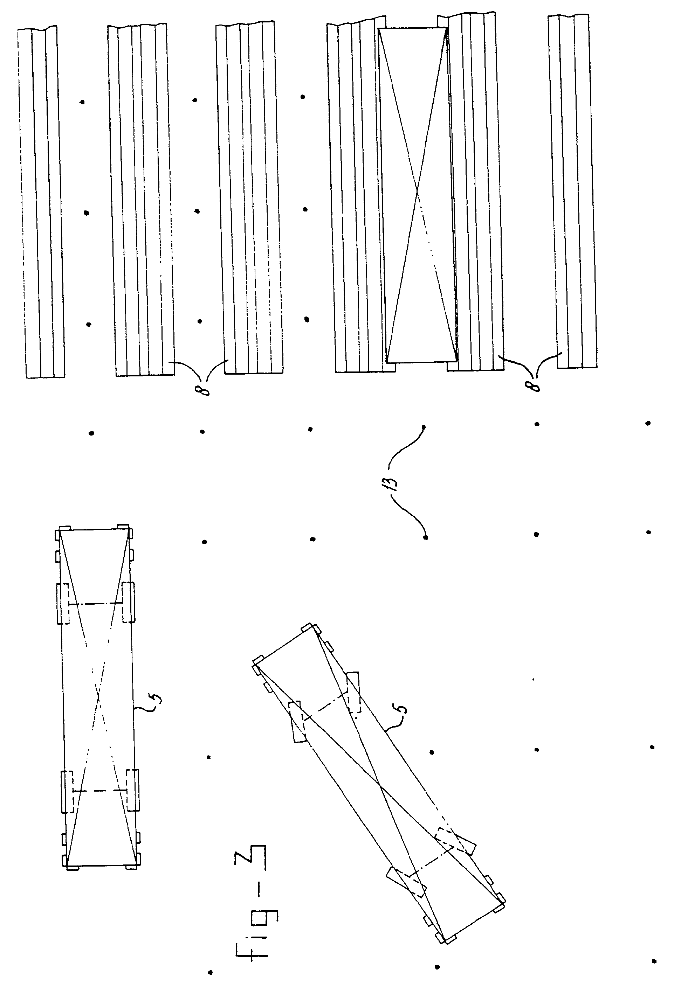

The storage and trans-shipment site for containers shown in top view in Figures 1, 2 and 3 shows a quay 1 at which ships have been moored, a number of loading and unloading cranes 2 for containers known per se located on said quay, and a container storage depot with a number of ways 4 for gantry cranes.

Completely automatically controlled cars 5 not guided by rails are used for the transport of containers between the cranes 2 and the storage depot 3.

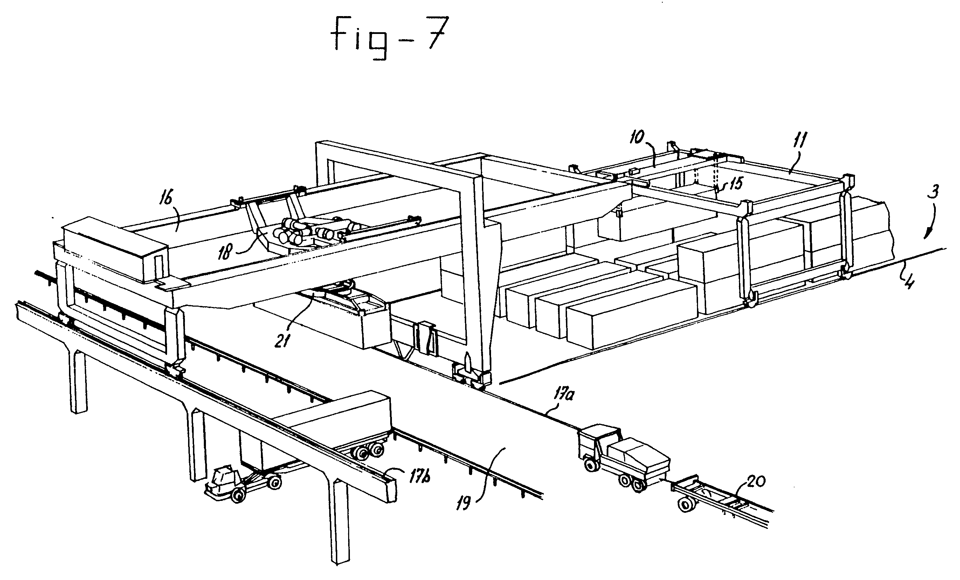

Each gantry craneway 4 in the embodiment shown in Figure 7 is rather more than five container widths in width, although obviously another multiple of the container width may also be used. At the two outermost storage places for five containers, two containers can be stacked on top of each other, while no containers are placed on top of each other in the intervening three storage places. Where there are six containers, two containers can be stacked on top of each other at the four (two × two) outermost storage places.

It is important that the gantry craneways 4 have one extremity extending into the quay area. Transport by means of the cars is thus kept to a minimum.

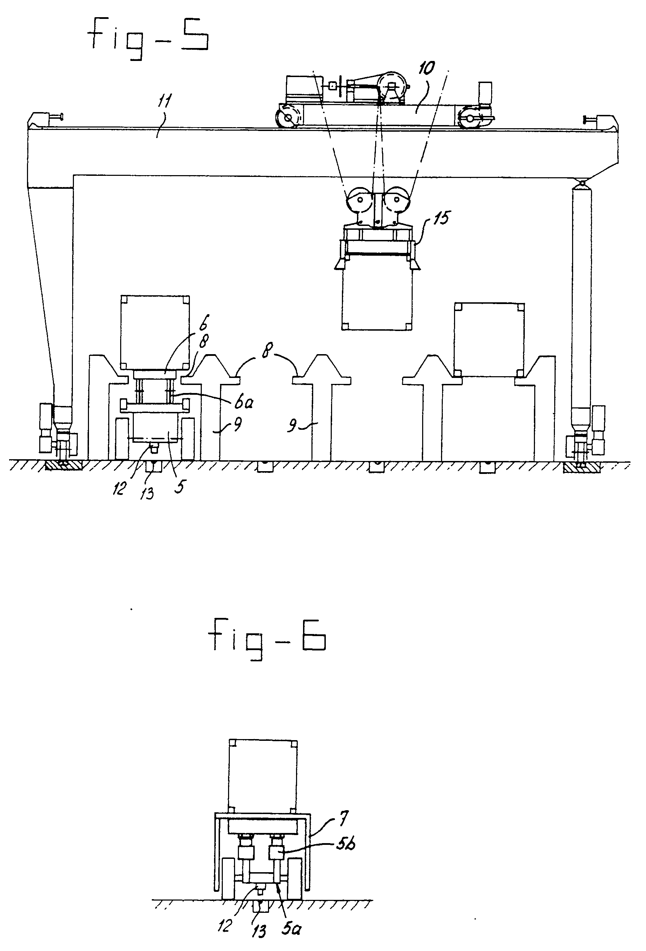

Each car 5 has a lifting platform 6 that can be raised and lowered with respect to the chassis by a mechanical, pneumatic or hydraulic lifting mechanism. The containers are placed on a lifting platform 6 of the cars by a quay crane 2 (Figure 5). Supporting tables 8 which are supported by legs 9 are placed in the buffer area between the cars and the container storage depot. The distance between the supporting tables 8 is smaller than the width of a container, whereas the distance between the legs 9 is larger than the widths of the cars 5. Each car can move through between the leg 9 with the lifting platform 6 raised and, by letting said platform down, puts a container down on two tables 8, where the container can be picked up by a gantry crane 11 at an arbitrary point in time.

If the cars are not provided with a lifting platform but have a chassis 5a that can be raised and lowered by hydro-pneumatic springs 5b, gantry-type skids (Figure 6) may be used. The containers are placed on a skid 7 by the quay crane, a car 5 drives into a skid 7 with its chassis 5a lowered and the chassis with skid 7 and container are raised. In the buffer area at the start of the gantry craneways 4, the chassis is lowered again for putting down the gantry-type skid 7 with the container. The two alternative embodiments, being the one with a lifting platform 6 and supporting tables 8 and the one with a vertically movable chassis respectively, have the advantage that each container can be stored temporarily at the start of the gantry craneways 4 so that said area can form a buffer. However, the possibility that the gantry cranes 11 lift the containers directly from the cars 5 or place them on top is not excluded, in which case the tables 8 and the gantry-type pallets 7 are not required and there is no buffer between the car system and the container storage depot.

In many cases this will be preferable with regard to the simplicity of the cars. It is noted that a buffer may also be formed where the quay cranes are located, for example because of the fact that supporting tables are hung on the quay cranes.

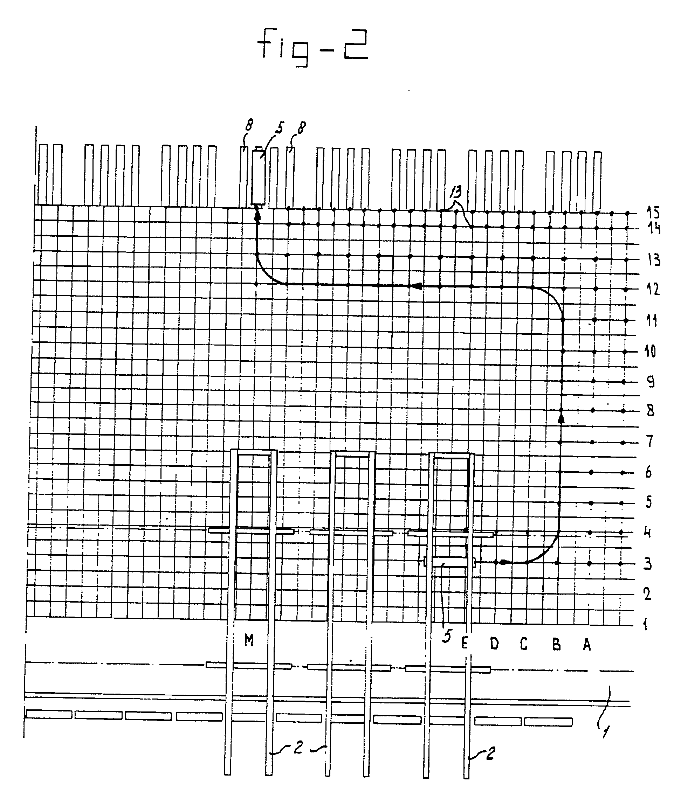

Each car is provided with a navigation system, housed in a case 12, that is intended for automatic control of the car with the help of a freely programmable route selection system. This system is able to make the car drive along pre-programmed positions. The positions will usually be part of a system of co-ordinates. Figure 2 shows a part of such a system of co-ordinates, for which the pre-programmed command was : E3, B3, B12, M12, M15. The navigation means determine the path taken with the help of facilities known per se such as acceleration sensors, steering angle transducers, encoders (pulse counters for determining the number of revolutions of a wheel), radar, a laser gyro, or a combination of these, and compare the path taken with the path to be followed. The control elements of the car (means of starting, fuel supply, braking, angle of the wheels and such like) are controlled such that the car will take the desired path.

In addition to said navigation system there is a position-determining system that can correct faults and inaccuracies in the navigation carried out by the cars. This position-determining system comprises a reference grid in, on or underneath the ground of the quay area and, on each car, one or more transmitter-receiver units that can interact with the reference grid in order to determine the exact position of the car. If this position deviates from the desired position, correction signals are sent to the control means of the car. There are in principle three possibilities for embodying the reference grid :

1. So-called transponders 13 (Fig. 2) placed in the paving ; these are integrated circuits (I.C's) that are not linked with each other nor with an energy source. The transponders are placed at junctions in the grid.

2. Induction wires, placed in or on the paving, that run according to the grid lines.

3. Metal strips, placed in or on the paving, that similarly run according to the grid lines.

Combinations are also possible.

In the case of a transponder grid the transmitter-receiver units 14 generate a wave signal that is broadcast via a transmission-detection spool. A transmission area is formed in which a transponder can be activated. The receiver receives a signal coded by registration of the change in impedance via the spool of the activated transponder, which signal is identified. The said detection spool forms in fact the connecting link between the transmitter-receiver and the transponder. The transponder system is a means for correcting errors in the navigation carried out by the cars themselves. The transponders are the control beacons.

In the case of a grid of induction wires the receiver units of the cars can scan an electromagnetic field.

If there is a grid of metal strips the transmitter-receiver units consist of the metal detectors.

The possibility that transponders 13 are placed at the junctions of a grid of active or passive inductive wires is not excluded. These wires could promote the accuracy and/or fluency of the movements of the cars. In this it can therefore be a matter of the combination of the possibilities mentioned above under 1 and 2.

For example, the successive co-ordinates of the co-ordinate system mentioned above are 8 metres apart, such that each rectangle has dimensions of 8 × 8 metres. In the case where transponders 13 are used, these are, for example, ordered as shown in Figure 2.

The cars 5 will be provided with sensors to detect obstacles within braking distance and to bring the cars to a stop automatically if an obstacle is detected. This serves to prevent accidents. A central traffic guidance system will have to prevent the cars colliding with each other at paths which cross, or dead-lock situations arising.

The cars are constructed symmetrically, there being no difference between driving forwards and backwards. They are intended for the transport of only one container. The containers may have different lengths. The lengths of the loading floor of the cars is adapted to the length of the longest container to be transported.

The two sets of wheels of each car can be controlled independently, for example with hydraulic cylinders with electrically operated valves.

Control of the gantry cranes 11 is similarly completely automatic. This applies to the movement of the whole crane along its rails, to the movement of the travelling trolley 10 across the direction of the rails and to the movements of the yoke 15 upwards and downwards, and to the hooking-on and -off of the container with the latter.

Process control, with which all movements of the cars and the gantry cranes are co-ordinated, will have to be used. The control system determines, inter alia: the loading order per crane, the co-ordination of orders to the equipment, the assignment of buffer places during loading and unloading, the security, the interaction with the operator in the possible event of manual intervention. Control of the cars includes distribution of the vehicle orders, traffic regulation, collision safeguards and route optimization. It also encompasses data communication with the cars.

The process control is linked with a container control system that passes on the data on the containers to be loaded and unloaded and the identification data on incoming and departing containers to the process control. The process control comprises a traffic guidance system that receives information on the position, speed and direction of all deployed vehicles, and that calculates the room to be taken up by the car for each car path and determines the priority of one car over another. Furthermore the process control contains a vehicle control system that determines the vehicles which are available and regulates the even deployment of those vehicles. An order-regulation system issues orders to cars, gantry cranes and land side cranes.

Figure 7 shows the despatch of containers on the land side. The land side cranes 16 are movable along railways perpendicular to the tracks 4 of the gantry cranes 11. These railways of the land side cranes have one rail 17a at ground level and one raised rail 17b. The lorries to be loaded and unloaded can drive through underneath the raised rail 17b to a position within reach of the travelling trolley 18 of the crane 16. Next to the rail 17a there is in addition a part of a lane 19 for container transport means consisting of various container wagons 20 (multi-trailer system).

The travelling trolley 18 of the land side cranes 16 has a turntable 21 with which the lifted containers can be turned through 90° or 180°.

The picking-up or putting-down of the containers from or in, respectively, the buffer area between the land side cranes and the gantry cranes is done completely automatically, the process control for the whole system being switched on. The picking-up or putting-down of containers from or on, respectively, a lorry or multi-trailer system (MTS) is done partly manually.

Placing of the containers on the cars by the quay cranes can be done efficiently and accurately by using the chassis loader according to Dutch Patent Application 87.00893.

The containers are stored randomly in the warehouse. The lorry driver checking in gets an order to drive to a particular loading bay opposite a gantry craneway and in the meantime an order is given to the gantry crane in question to pick up a particular container from the storage depot and to bring it to the buffer area between the gantry crane and the land side crane, where the latter crane automatically picks up the container and brings it above the lorry.

It is not excluded that in the case of temporary peaks the gantry cranes work at a higher speed.

Within the scope of the invention various changes are possible. It may thus be that the land side cranes are not installed and that the containers that are brought into the buffer area by the gantry cranes are taken away using conventional means such as straddle carriers and fork-lift trucks, and vice versa.

## Claims

1. Storage and trans-shipment system for containers, comprising a quay (1) with quay cranes (2) for loading and unloading container ships moored at said quay, a container storage depot (3) that is provided with a set of gantry craneways (4) placed next to each other, a number of cars (5) not guided by rails for the transport of containers between the quay cranes and the gantry cranes (11), and means for automatic control of the cars, characterized in that the means for automatic control of the cars comprise a freely programmable route selection system that is able to guide each car along pre-programmed positions in the quay area without guideways, each car being provided with navigation means to determine the path taken and to compare this with the path to be taken, in that a reference grid of transponders (13) and/or induction wires and/or metal strips is placed in, on or underneath the metalling of the quay area, and each car is provided with one or more transmitter-receiver units (14) which, by interaction with said reference grid, can determine the position of the car and transmit signals to the control means of the car for correction of the car's position.

2. System according to Claim 1, characterized in that at least an end section of the gantry craneways (4) extends into the quay area.

3. System according to Claim 1 or 2, characterized in that the cars (5) are provided with sensors for determining whether there is an obstacle within braking distance and means for bringing about an automatic stop in case an obstacle is detected.

4. System according to one of the preceding claims, characterized in that the cars are provided with means (5a, 5b, 6a) for moving the carrying surface thereof up and down.

5. System according to Claim 4, characterized in that the cars have a separate lifting platform (6) and in that supporting tables (8) resting on one or more legs (9) are placed in the area for transfer of containers between the cars and the gantry cranes, the smallest distance between said tables being smaller than the width of the containers and the distance between the legs being sufficiently large to allow a car to pass through.

6. System according to Claim 4, characterized in that the complete chassis of the cars can be raised and lowered and in that gantry-type skids (7) are present for transporting containers between the quay and the gantry cranes, the cars being able to drive into the skids and being able to lift said skids with a container standing on top.

7. System according to one of the preceding claims, characterized in that one or more land side cranes (16) are placed on the side of the gantry cranes (11) away from the quay, which land side cranes are able to travel along railways (17a, 17b) perpendicular to the gantry craneways, at least said railway (17b) of the land side cranes that is furthest away from the gantry cranes being raised.

8. System according to Claim 7, characterized in that the land side cranes (16) operate completely automatically on the gantry crane side and at least partially manually on the other side.

9. System according to Claim 7 or 8, characterized in that the land side cranes are provided with a trolley (18) with a turntable (21) for turning a container through 90° or 180°.

## Ansprüche

1. Speicher- und Überführungssystem für Container, umfassend ein Kai (1) mit Kaikränen (2) zum Be- und Entladen von Container-Schiffen, die an dem genannten Kai festgemacht sind, ein Container-Speicherdepot (3), das mit einer Gruppe von Portalkran-Laufbahnen (4) versehen ist, die nebeneinander angeordnet sind, eine Anzahl von nicht auf Schienen geführten Fahrzeugen (5) für den Transport von Containern zwischen den Kaikränen und den Portalkränen (11), und Mittel für die automatische Steuerung der Fahrzeuge, dadurch gekennzeichnet, daß die Mittel für die automatische Steuerung der Fahrzeuge ein frei programmierbares Wegewählsystem umfaßt, das in der Lage ist, jedes Fahrzeug entlang vorprogrammierter Positionen in dem Kaibereich ohne Führungsbahnen zu führen, wobei jedes Fahrzeug mit einer Navigationseinrichtung zur Bestimmung des einzuschlagenden Weges und zum Vergleich desselben mit dem Sollweg versehen ist, das ein Bezugsgitter von Transpondern (13) und/oder Induktionsdrähten in, auf oder unter der Straßendecke des Kaibereichs angeordnet ist, und jedes Fahrzeug mit einer oder mehreren Sender-Empfänger-Einheiten (14) versehen ist, die durch gegenseitige Beeinflussung mit dem genannten Bezugsgitter die Position des Fahrzeugs bestimmen, um Signale zu der Steuervorrichtung des Fahrzeugs zwecks Korrektur der Fahrzeugposition zu übermitteln.

2. System nach Anspruch 1, dadurch gekennzeichnet, daß mindestens ein Endabschnitt der Portalkran-Laufbahnen (4) sich in den Kaibereich erstreckt.

3. System nach Anspruch 1 oder 2, dadurch gekennzeichnet, daß die Fahrzeuge (5) mit Sensoren zur Feststellung eines Hindernisses innerhalb des Bremsweges sowie mit Mitteln zum automatischen Anhalten für den Fall versehen sind, daß ein Hindernis festgestellt wird.

4. System nach einem der vorhergehenden Ansprüche, dadurch gekennzeichnet, daß die Fahrzeuge mit Mitteln (5a, 5b, 6a) zum Auf- und Abbewegen ihrer Tragfläche versehen sind.

5. System nach Anspruch 4, dadurch gekennzeichnet, daß die Fahrzeuge eine besondere Hubplattform (6) haben und daß auf einer oder mehreren Stützen (9) ruhende Tragtische (8) in dem Container-Überführungsbereich zwischen den Fahrzeugen und den Portalkränen angeordnet sind, wobei der kleinste Abstand zwischen den Tischen kleiner als die Breite der Container und der Abstand zwischen den Stützen genügend groß ist, damit ein Fahrzeug durch sie hindurchbewegt werden kann.

6. System nach Anspruch 4, dadurch gekennzeichnet, daß das komplette Fahrgestell der Fahrzeuge angehoben und abgesenkt werden kann und daß Fahrgestelle der Portalbauart für den Transport von Behältern zwischen dem Kai und den Portalkränen vorhanden sind, wobei die Fahrzeuge in die Fahrgestelle bewegbar sind und die Fahrgestelle mit einem auf dessen Oberseite stehenden Container anheben können.

7. System nach einem der vorhergehenden Ansprüche, dadurch gekennzeichnet, daß ein oder mehrere landseitige Kräne (16) auf der vom Kai abgekehrten Seite der Portalkräne (11) angeordnet sind, wobei die landseitigen Kräne entlang von Schienen (17a, 17b) bewegbar sind, und mindestens diejenige Schiene (17b) der landseitigen Kräne, die am weitesten von den Portalkränen entfernt ist, erhöht angeordnet ist.

8. System nach Anspruch 7, dadurch gekennzeichnet, daß die landseitigen Kräne (16) vollständig automatisch an der Portalkranseite und mindestens teilweise von Hand auf der anderen Seite betätigbar sind.

9. System nach Anspruch 7 oder 8, dadurch gekennzeichnet, daß die landseitigen Kräne mit einer Katze (18) mit einem Drehtisch (21) zum Drehen eines Containers über 90° oder 180° versehen sind.


## Revendications

1. Système de stockage et de transbordement de conteneurs, comprenant un quai (1) avec des grues de quai (2) pour charger et décharger des navires porte-conteneurs amarrés à ce quai, un dépôt de stockage (3) des conteneurs avec un ensemble de chemins de roulement (4) pour grues à portique, placés les uns auprès des autres, un certain nombre de chariots (5) non guidés par rails, pour le transport des conteneurs entre les grues de quai et les grues à portique (11), et des moyens de commande automatique des chariots, caractérisé en ce que les moyens de commande automatique des chariots comprennent un système de sélection de trajets librement programmable, capable de guider chacun des chariots suivant des positions préprogrammées sur la surface du quai, sans rails de guidage, chaque chariot étant muni de moyens de navigation pour déterminer le chemin qu'il a pris et le comparer au chemin à prendre, en ce qu'une grille de référence de répondeurs (13), et/ou de fils d'induction, et/ou de rubans métalliques est placée dans, sur, ou au-dessous de la métallisation de la surface du quai, et en ce que chaque chariot est muni d'au moins un ensemble émetteur-récepteur (14) qui, par interaction avec ladite grille de référence, peut déterminer la position du chariot et transmettre des signaux aux moyens de commande du chariot pour corriger sa position.

2. Système selon la revendication 1, caractérisé en ce qu'au moins une section d'extrémité des chemins de roulement (4) pour grues à portique s'étend sur la surface du quai.

3. Système selon l'une des revendications 1 ou 2, caractérisé en ce que les chariots (5) sont munis de capteurs pour déterminer s'il y a un obstacle à distance de freinage, et de moyens pour provoquer un arrêt automatique si un obstacle est détecté.

4. Système selon l'une des revendications précédentes, caractérisé en ce que les chariots sont munis de moyens (5a, 5b, 6a) pour faire monter et descendre leur surface porteuse.

5. Système selon la revendication 4, caractérisé en ce que les chariots ont une plate-forme élévatrice individuelle (6), et en ce que des plateaux supports (8) reposant sur un ou plusieurs pieds (9) sont placés dans la zone de transfert des conteneurs entre les chariots et les grues à portique, la plus petite distance entre ces plateaux étant plus faible que la largeur des conteneurs, et la distance entre les pieds étant suffisamment grande pour permettre le passage d'un chariot.

6. Système selon la revendication 4, caractérisé en ce que le châssis complet des chariots peut être élevé et abaissé, et en ce qu'il y a des patins (7) du type à portique, pour transporter les conteneurs entre le quai et les grues à portique, les chariots pouvant entrer dans les patins et pouvant lever ces patins chargés d'un conteneur.

7. Système selon l'une des revendications précédentes, caractérisé en ce qu'une ou plusieurs grues du côté terrestre (16) sont placées du côté des grues à portique (11) opposé au quai, ces grues du côté terrestre étant capables de se mouvoir suivant des rails (17a, 17b) perpendiculaires aux chemins de roulement des grues à portique, au moins le rail (17b) des grues du côté terrestre qui est le plus éloigné des grues à portique étant surélevé.

8. Système selon la revendication 7, caractérisé en ce que les grues du côté terrestre (16) travaillent de façon complètement automatique du côté des grues à portique, et au moins partiellement de façon manuelle de l'autre côté.

9. Système selon l'une des revendications 7 ou 8, caractérisé en ce que les grues du côté terrestre sont munies d'un moufle (18) avec plateau tournant (21) pour faire tourner un conteneur de 90° ou 180°.

fig-1

fig-2

fig-3

Fig-4a

Fig-4b

Fig-5

Fig-6

Fig-7